# EUROPÄISCHE PATENTSCHRIFT

(11) **EP 0 892 601 B1**
(45) Veröffentlichungstag und Bekanntmachung des Hinweises auf die Patenterteilung: **04.06.2003**
(21) Anmeldenummer: 97915448.1
(22) Anmeldetag: 27.03.1997
(51) Int. Cl.: A01N 25/04, A01N 53/00

(54) **NEUE, INSEKTIZIDE SUSPENSIONSKONZENTRATE**
NEW INSECTICIDE SUSPENSION CONCENTRATES
NOUVEAUX CONCENTRES INSECTICIDES EN SUSPENSION

(30) Priorität: 09.04.1996 DE 19613974
(43) Veröffentlichungstag der Anmeldung: 27.01.1999
(73) Patentinhaber: Bayer CropScience AG, 40789 Monheim (DE)
(72) Erfinder: SIRINYAN, Kirkor, D-51467 Bergisch Gladbach (DE); BÖCKER, Thomas, D-42799 Leichlingen (DE); MRUSEK, Klaus, D-51467 Bergisch Gladbach (DE); SCHNEIDER, Ulrike, D-40764 Langenfeld (DE); SONNECK, Rainer, D-51375 Leverkusen (DE)
(86) Internationale Anmeldenummer: EP9701568
(87) Internationale Veröffentlichungsnummer: WO97037538

(56) Entgegenhaltungen:
- EP-A- 0 029 626
- WO-A-95/15146
- WO-A-95/26631
- WO-A-96/25850
- DE-C- 837 243
- GB-A- 1 173 027
- US-A- 4 678 774
- DATABASE WPI Section Ch, Week 9329 Derwent Publications Ltd., London, GB; Class A97, AN 93-232211 XP002034193 & JP 05 155 706 A (NIPPON SODA CO) , 22.Juni 1993
- CHEMICAL ABSTRACTS, vol. 102, no. 25, 24.Juni 1985 Columbus, Ohio, US; abstract no. 216909, XP002034192 & JP 60 013 701 A (SUMITOMO) 24.Januar 1985
- DATABASE WPI Section Ch, Week 8949 Derwent Publications Ltd., London, GB; Class A97, AN 89-359856 XP002034194 & JP 01 268 604 A (KUMIAI CHEM IND CO LTD) , 26.Oktober 1989 in der Anmeldung erwähnt
- DATABASE WPI Section Ch, Week 8947 Derwent Publications Ltd., London, GB; Class A97, AN 89-345116 XP002034195 & JP 01 258 603 A (KUMIAI CHEM IND CO LTD) , 16.Oktober 1989 in der Anmeldung erwähnt
- DATABASE WPI Section Ch, Week 8335 Derwent Publications Ltd., London, GB; Class C03, AN 83-750620 XP002034196 & JP 58 124 703 A (SUMITOMO CHEM CO LTD) , 25.Juli 1983

## Beschreibung

Die vorliegende Erfindung betrifft neue, wässrige Suspensionen des insektiziden Wirkstoffes β-Cyfluthrin.

Bei. der Anwendung schwer wasserlöslicher Wirkstoffe in Form von wasserverdünnten Spritzmitteln ist es notwendig, mit Wasser suspendierbare Formulierungen für diese Wirkstoffe herzustellen. Dazu werden die Wirkstoffe gemahlen und mit Emulgatoren, Dispergatoren und gegebenenfalls weiteren Zusatzstoffen vermischt. Die Herstellung solcher Formulierungen ist z.B. in DE 28 11 828, DE 32 40 862 beschrieben.

Es ist bekannt, dass man TiO₂, Al₂O₃ und SiO₂ als Formulierungshilfsmittel zur Herstellung von insektiziden Formulierungen verwendet. So wird beispielsweise in der Patentschrift US 51 10 594 die Verwendung von Al₂O₃ zur Herstellung von insektizidhaltigen, imprägnierten Papierbeschichtungen beschrieben. In der Anmeldung ES-A 20 22 016 werden TiO₂-haltige Insektizidbeschichtungen beschrieben.

In der EP-A 391 851 werden Al₂O₃-haltige Feststoff-Formulierungen beschrieben.

In den Patentschriften JP 01268604 und JP 01258603 werden Al₂O₃-haltige insektizide Suspensionen beschrieben.

Die in diesen Formulierungen eingesetzten Oxide verbessern im wesentlichen die physikalischen Eigenschaften wie Filmbildung oder Suspensionsstabilifät der Formulierung.

In der Patentschrift JP 01279802 werden mit Chlorpyrifos imprägnierte Al₂O₃/SiO₂-Träger, die zur Herstellung von Pulverformulierungen eingesetzt werden, beschrieben. Durch diese Maßnahme soll eine bessere Applizierbarkeit durch eine Staubbildung erzielt werden.

DE-A-837243 beschreibt Schwebemittel für wässrige Suspensionen, welche fiir die Imprägnierung von Wirkstoffen Verwendung finden oder verdüst werden sollen.

EP-A-0 029 626 beschreibt wässrige pestizide Suspensionen und einen Prozess fiir deren Herstellung.

WO 96/25850 beschreibt die Verwendung von Aerogelen als Trägermaterial für aktiv wirksame Substanzen in landwirtschaftlichen und/oder veterinärmedizinischen Bereich.

Die vorliegende Erfindung betrifft wässrige Suspensionen von β-Cyfluthrin, dadurch gekennzeichnet, dass sie
a) 0,1 bis 12,5 % eines anorganischen Trägers mit einer Teilchengröße von 1 bis 30 µm, auf das β-Cyfluthrin aufgebracht ist,
b) 2,5 bis 10 % Formulierungshilfsmittel,
c) 62,5 bis 97,4 % Wasser
d) 0 bis 15 % Glycerin
enthalten (die %-Angaben sind Gewichtsprozente).

Die erfindungsgemäßen Formulierungen eignen sich hervorragend zur Herstellung von Spritzbrühen für den professionellen Einsatz bei der Schädlingsbekämpfung in Haushalt, Gewerbe, Stallungen etc. Sie zeichnen sich durch hervorragende Lagerstabilität sowie sehr gute Dispergierbarkeit in Wasser aus. Sie sind außerdem preiswert herzustellen. Die ausgewählten Lösungsmittel sind unproblematisch fiir den Anwender.

Als Wirkstoffe seien genannt das im Hygiene- und professionellen Schädlingsbekämpfüngsbereich eingesetzte Insektizid, β-Cyfluthrin, sowie Mischungen von β-Cyfluthrin mit Synergisten.

Als Synergist für β-Cyfluthrin sei bevorzugt genannt Piperonylbutoxid.

Anorganische Träger sind TiO₂, Al₂O₃, MgO und SiO₂ bzw. deren Mischungen untereinander.

Besonders bevorzugter Träger ist Al₂O₃.

Das auf einem anorganischen Träger aufgebrachte β-Cyfluthrin liegt zu 0,1 bis 12,5 %, bevorzugt 0,1 bis 7,5 %, ganz besonders bevorzugt 0,1 bis 5 % vor. Zusätzlich kann die Formulierung auch enthalten: freies β-Cyfluthrin in Konzentrationen von 0,1 bis 12,5 %, bevorzugt 0,1 bis 7,5 %, ganz besonders bevorzugt 0,1 bis 5 %. Freies β-Cyfluthrin kann herstellungsbedingt, z.B. verursacht durch Abrieb vorliegen. Die Menge des auf Träger aufgebrachten β-Cyfluthrin und des freien β-Cyfluthrin zueinander kann breit variieren.

Die mittlere Teilchengröße des Trägers auf den β-Cyfluthrin aufgebracht ist, z.B. Al₂O₃ oder TiO₂ liegt bei 1,0 bis 30,0 µm, bevorzugt 5,0 bis 25,0 µm, ganz besonders bevorzugt 6,0 bis 15,0 µm.

Das Träger-β-Cyfluthrin-System kann als symmetrisches kugelförmiges oder asymmetrisches Gebilde vorliegen. Seine Teilchengröße wird mittels bekannter Analysenmethode wie Siebanalyse usw. ermittelt.

Die β-Cyfluthrin-Beschichtung der Träger kann durch gängige Beschichtungsverfahren wie Tauchen oder Besprühen und anschließendes Verdampfen des Lösungsmittels erzielt werden. Der mit dem Wirkstoff beschichtete Träger kann gegebenenfalls anschließend mit weiterem fein gemahlenem Wirkstoff verinischt und homogenisiert werden.

Eine andere Möglichkeit stellt die in situ Herstellung einer Abmischung bestehend aus mit dem β-Cyfluthrin beschichtetem Träger und freiem, feinpulverigem β-Cyfluthrin dar. Die Herstellung solcher Systeme kann bekannterweise mittels Variierung der Konzentration der Wirkstoff-Lösung, Verdampfungsgeschwindigkeit des Lösungsmittels usw. gesteuert werden.

Zusätzlich können die erfindungsgemäßen Formulierungen übliche Hilfsstoffe wie Emulgatoren, Stabilisatoren, Konservierungsmittel, Antioxidantien oder Geruchsmarkierungsmittel enthalten.

Als Emulgatoren seien genannt: nicht ionogene Tenside, z.B. polyoxyethyliertes Rizinusöl, polyoxyethyliertes Sorbitan-monooleat, Sorbitanmonostearat, Glycerinmonostearat, Polyoxyethylstearat, Alkylphenolpolyglykolether, beispielsweise analog US-PS 39 48 636 oder analog GB-PS 148 010; anionenaktive Tenside, wie Na-Laurylsulfat, Fettalkoholethersulfate, Mono/Dialkylpolyglykolether-orthophosphorsäureester-monoethanolaminsalz und Sulfobernsteinsäure-alkalisalze beispielsweise analog DE 32 40 862; kationenaktive Tenside wie Cetyltrimethylammoniumchlorid, ampholytische Tenside wie Di-Na-N-lauryl-ß-imino-dipropionat oder Lecithin.

Als Stabilisatoren und Antioxidantien seien genannt Sulfite oder Metabisulfite wie Kaliummetabisulfit, organische Säuren wie Citronensäure und Ascorbinsäure, anorganische Säuren wie Salzsäure oder Schwefelsäure, Phenole wie Butylhydroxytoluol, Butylhydroxyanisol und Tocophenol.

Als Konservierungsmittel seien genannt Formaldehyde bzw. Formaldehyd-abspaltende Mittel und Derivate der Benzoesäure wie z.B. p-Hydroxybenzoesäure.

Als weitere Hilfsmittel seien genannt: Entschäumungsmittel auf Polysiloxanbasis und Verdickungsmittel auf Polysaccharidbasis.

Die besagten Hilfsmittel können in den erfindungsgemäßen Formulierungen in Gewichtskonzentrationen von 2,5 bis 10 % enthalten sein.

Die Glycerinmenge liegt bei 0 bis 15 %, besonders bevorzugt 7,5 bis 12,5 %. Die Applikation der erfindungsgemäßen Mittel erfolgt auf einfache Weise dadurch, dass man die Suspensionskonzentrate mit der gewünschten Menge Wasser verdünnt, kurz verrührt und auf die Wände usw. appliziert.

Die neuen Suspensionskonzentrate zeichnen sich durch ihre hervorragende Sedimentstabilität aus.

Die Erfindung wird durch die nachstehenden Beispiele erläutert.

### Beispiel 1

- 11,8 g: β-Cyfluthrin beschichtetes Al₂O₃ (1) und freier Wirkstoff
- 3,0 g: Emulgator 373 Tri(methylstyryl)phenolethoxylat (29 EO)
- 11,6 g: Glycerin
- 0,36 g: Xanthan-gum (ein hochmolekulares Polysaccharid)
- 0,025 g: Schwefelsäure 96 %ig, technische Ware
- 0,1 g: Acrylmethanol-mono-hemifonnal
- 73,1 g: entionisiertes Wasser

### (1) Herstellung

125,0 g β-Cyfluthrin werden in 2.000 ml Aceton gelöst mit Al₂O₃ der Teilchengröße 4,8 bis 22,5 µm versetzt und das Aceton bei 54°C unter N₂ abdestilliert. Man bekommt mit β-Cyfluthrin beschichtete Al₂O₃-Träger. Die freie, nicht beschichtete Wirkstoffmenge liegt bei ca. 20 %. Die mittlere Teilchengröße des freien, nicht beschichteten Wirkstoffes liegt bei ca. 11 µm.

### Beispiel 2

- 11,8 g: β-Cyfluthrin beschichtetes A1₂O₃ (2) und freier Wirkstoff
- 3,0 g: Baykanol SL (ein Kondensationsprodukt eines 1 bis 2-fach sulfonierten Diarylether-Isomerengemisches der Fa. Bayer AG)
- 1,0 g: Baysilon-E (ein silikonhaltiger Entschäumer der Fa. Bayer AG)
- 3,5 g: neutraler Emulgator auf Basis Ethylenoxid und Propylenoxid (MG ^{~} 6.000 g/mole)
- 0,5 g: Xanthan-gum (ein hochmolekulares Polysaccharid)
- 0,025 g: Schwefelsäure 96 %ig, technische Ware
- 80,175 g: entionisiertes Wasser

### (2) Herstellung

125,0 g β-Cyflutrin werden in 1.750 ml Aceton gelöst mit Al₂O₃ der Teilchengröße 4 bis 28 µm versetzt und das Aceton bei 54°C unter N₂ abdestilliert.

Man bekommt mit β-Cyfluthrin beschichteten Al₂O₃-Träger. Die freie, nicht beschichtete Wirkstoffmenge liegt bei ca. 30 %.

Die Teilchengröße des freien, nicht beschichteten Wirkstoffs liegt bei ca. 6 µm.

### Vergleichsbeispiel

- 11,8 g: β-Cyfluthrin mit der mittleren Teilchengröße von ^{~} 4 µm
- 3,0 g: Emulgator 373
- 11,6 g: Glycerin
- 0,36 g: Xanthan-gum
- 0,025 g: Schwefelsäure 96 %ig, technische Ware
- 0,1 g: Acrylmethanol-mono-hemiformal
- 73,1 g: entionisiertes Wasser

### Beispiel A

### Prüfung auf Residualwirkung

### Versuchsmethode

- Formulierung:: SC = suspension concentrate.
- Oberflächen:: PVC (Tarket spezial, lichtgrün, Artikel Nr. 657.427.52), lackiertes Sperrholz (Lack von Herbol Malerqualität weiß, 301 RAL 9010), unlasierte Kacheln (Villeroy und Boch, Art. 2103, Col. 435, Nuance 558), (Größe: 15 x 15 cm = 225 cm²)
- Testtiere:: Blattella germanica L 5, Blatta orientalis L 5
- Behandlung der Oberflächen:: Das Besprühen der Oberflächen wird in einem Abzug durchgeführt, in dem die Luft so reguliert werden kann, daß der Sprühstrahl nicht beeinträchtigt wird. Die Formulierungen werden in Leitungswasser gelöst. Der Sprühvorgang erfolgt mit einer Glasdüse bei einem Luftdruck von 0,1 bar aus einer Entfernung von 13 cm. Die Aufwandmenge beträgt 2,5 cm³/Oberfläche, was abzüglich Sprühverlust einer Sprühmenge von 100 cm³/m² entspricht.
- Tiermaterial und Auswertung:: Jeweils 5 Testtiere werden auf den Oberflächen innerhalb von talkumierten Glasringen (Durchmesser 9,4 cm, Höhe 5,5 cm) gehalten. Die Tiere werden einen Tag nach Behandlung sowie nach 1, 2, 3, 4, 6 und 8 Wochen sowie weiter in vierwöchigen Abständen auf die Oberflächen gesetzt und blieben dort jeweils für 24 Stunden expositioniert.
Die Auswertung erfolgte auf % knock down nach 15, 30 und 60 Minuten danach nach 2, 3, 4, 5, 6 und 8 Stunden.
Nach 24 Stunden wird die prozentuale Abtötung bestimmt und die Tiere von den Oberflächen genommen.

Residualwirkung von β-Cyfluthrin in verschiedenen Formulierungen auf unterschiedlichen Unterlagen.

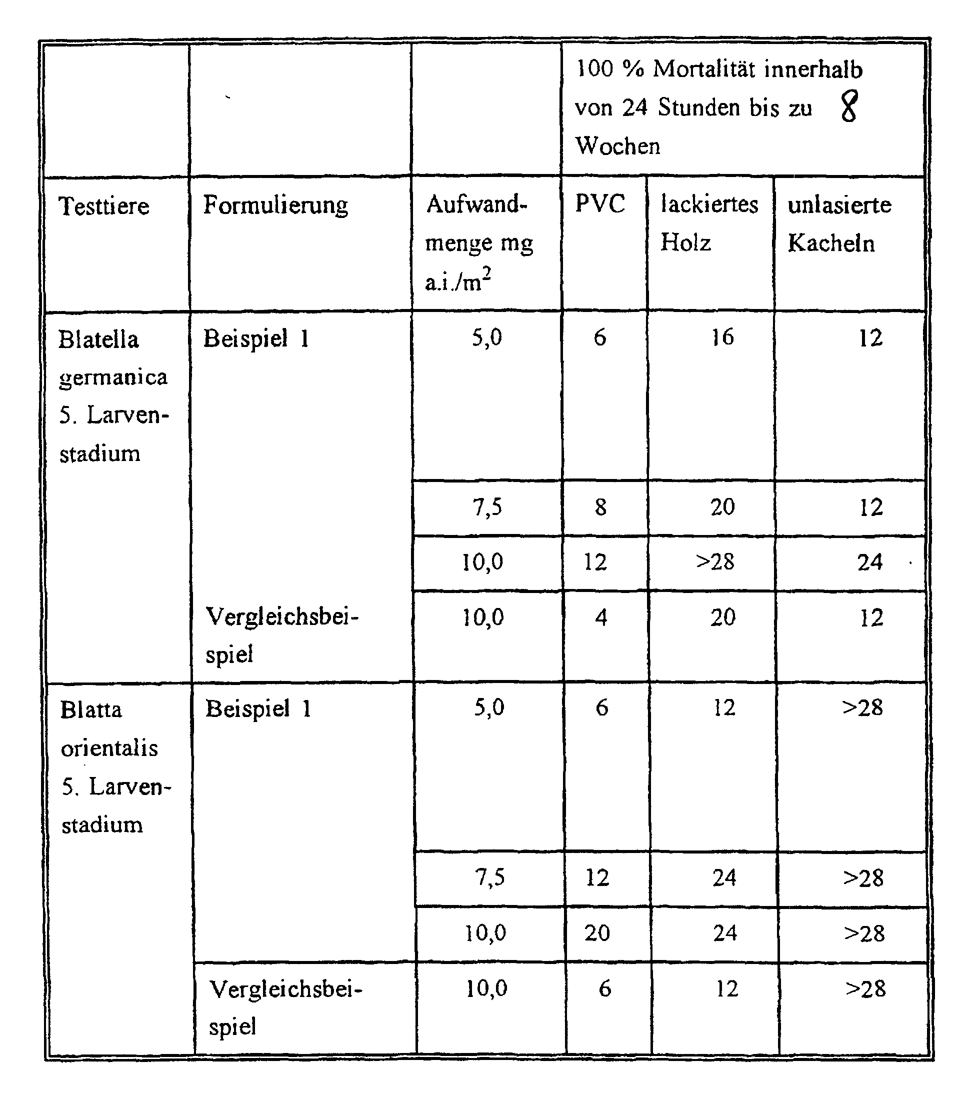

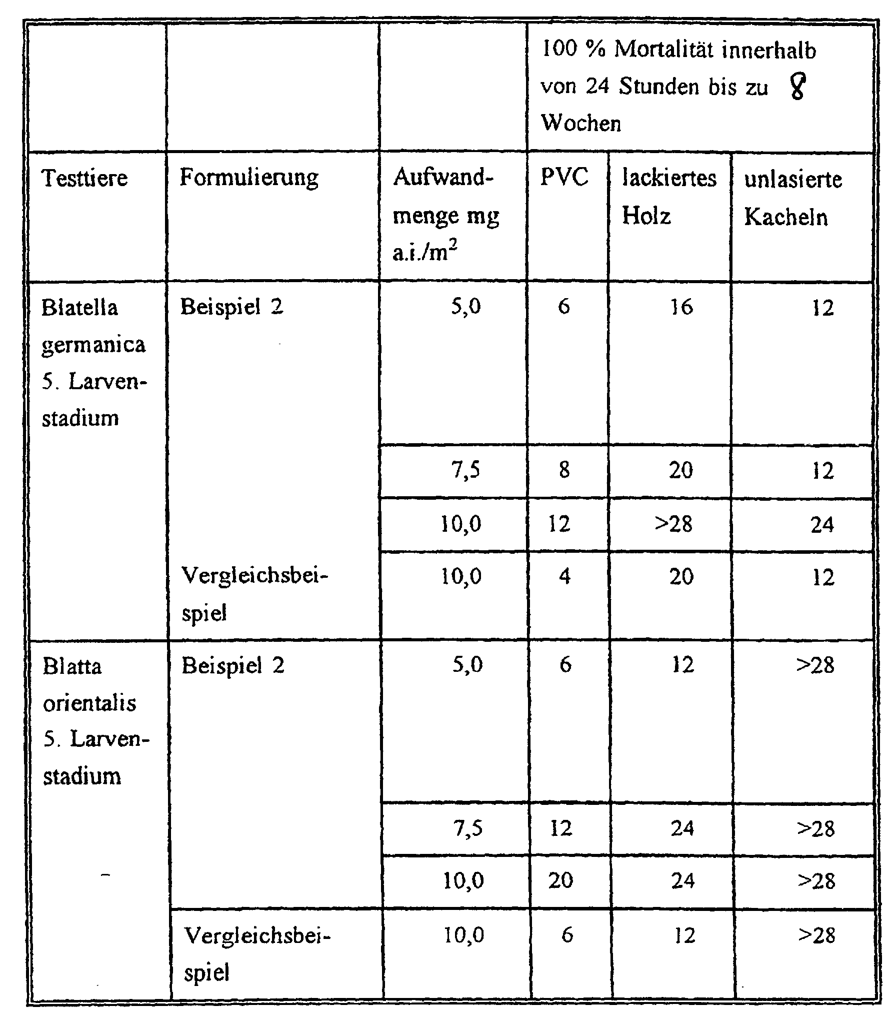

Residualwirkung von β-Cyfluthrin in verschiedenen Formulierungen auf unterschiedlichen Unterlagen.

## Patentansprüche

1. Wässrige Suspensionen von β-Cyfluthrin, **dadurch gekennzeichnet, dass** sie
a) 0,1 bis 12,5 % eines anorganischen Trägers mit einer Teilchengröße von 1 bis 30 µm auf den das β-Cyfluthrin aufgebracht ist,
b) 2,5 bis 10 % Formulierungshilfsmittel,
c) 62,5 bis 97,4 % Wasser
d) 0 bis 15 % Glycerin
enthalten (die %-Angaben beziehen sich auf Gewichtsprozente).

## Claims

1. Aqueous suspensions of β-cyfluthrin, **characterized in that** they comprise
a) 0.1 to 12.5 % of an inorganic carrier having a particle size of 1 to 30 µm and bearing the β-cyfluthrin,
b) 2.5 to 10 % of formulation auxiliaries,
c) 62.5 to 97.4 % of water
d) 0 to 15 % of glycerol
(the percentages are % by weight).

## Revendications

1. Suspensions aqueuses de β-cyfluthrine, **caractérisées en ce qu'**elles contiennent
a) 0,1 à 12,5 % d'un support inorganique en particules de 1 à 30 µm de diamètre, sur lequel la β-cyfluthrine est appliquée,
b) 2,5 à 10 % d'auxiliaire de formulation,
c) 62,5 à 97,4 % d'eau,
d) 0 à 15 % de glycérol,
(les indications de pourcentages se rapportant à des pourcentages en poids).
